(19) Europäisches Patentamt
European Patent Office
Office européen des brevets

(11) Publication number: **0 264 871 B1**

# (12) EUROPEAN PATENT SPECIFICATION

(45) Date of publication of patent specification: **13.07.94**

(51) Int. Cl.[5]: **C08F 220/12**, C08J 5/18, //(C08F220/12,222:02)

(21) Application number: **87115225.2**

(22) Date of filing: **17.10.87**

## (54) A film of rubbery latex, articles of manufacture made from the film, and a process of making the film.

(30) Priority: **20.10.86 US 921166**

(43) Date of publication of application:
**27.04.88 Bulletin 88/17**

(45) Publication of the grant of the patent:
**13.07.94 Bulletin 94/28**

(84) Designated Contracting States:
**AT BE CH DE ES FR GB GR IT LI LU NL SE**

(56) References cited:
**US-A- 4 406 660**

(73) Proprietor: **The B.F. Goodrich Company**
**3925 Embassy Parkway**
**Akron Ohio 44313(US)**

(72) Inventor: **Stanislawczyk, Vic**
**5115 Lake Road A-408**
**Sheffield Lake Ohio 44054(US)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1) Field of the Invention

This invention is directed to a coalesced latex film having an excellent balance of physical properties, including low temperature flexibility, good resistance to heat and light aging, a good balance of physical properties such as high tensile strength and elongation, low percentage hysteresis loss, and softness with low tack. The present invention also relates to a process of making the film, and to articles of manufacture made from the film.

2) Prior Art

Conventional acrylic films made from latexes containing polymers of interpolymerized units of an acrylate acid ester(s), up to major amounts of other copolymerizable monomers, an unsaturated carboxylic acid such as acrylic acid, and a crosslinking monomer such as N-alkylol acrylamide are well known. Latex films can find application in paints, coatings for paper or other materials or supported or unsupported dipped goods, for example.

There are many examples of acrylic latexes in the art. U.S.-A-2,757,106; 3,231,533; 3,539,434; and 4,501,289 are but a few examples of such patents. More particularly, patents which recite or disclose acrylic latex polymers containing interpolymerized units of unsaturated dicarboxylic acids such as itaconic acid are more relevant to the present invention. Examples of such patents are U.S.-A-2,754,280; 3,714,078; 4,071,650; 4,181,769; 4,268,546; 4,289,823; 4,291,087; 4,351,875; 4,406,660; and 4,455,342. However, these references either do not distinguish the use of dicarboxylic versus monocarboxylic acids, or they do not disclose the unique and improved films produced herein using the dicarboxylic acids. Prior to this invention, low Tg, soft acrylic films exhibited basically a poor balance of tensile strength and elongation properties and inadequate hysteresis characteristics. This is not surprising as normally there is a "trade-off" between good low temperature properties such as low temperature flexibility and good strength properties. The films of this invention exhibit a much improved balance of properties in this regard. Particularly, the novel films are basically low Tg, soft acrylic films that have a good balance of tensile strength and elongation and excellent hysteresis characteristics as shown by a low percent hysteresis loss.

SUMMARY OF THE INVENTION

This invention pertains to the use of a copolymer comprising interpolymerized units of from 1 to 20 weight parts of at least one unsaturated dicarboxylic acid containing 4 to 10 carbon atoms per molecule interpolymerized with 0.1 to 10 weight parts of a crosslinking monomer and at least 70 weight parts of at least one copolymerizable monomer of which a majority is at least one acrylate monomer, all weight parts based on 100 weight parts total of all monomers, as a film, having a Tg of from -20 to -60 ° C, a percent hysteresis loss of less than 20% and a raw film tensile strength of at least 2.068 MPa (300 psi) and an elongation of at least 350 percent.

The present invention further pertains to a process for preparing a film from a latex comprising the steps of:

preparing a latex having a polymer with Tg of from -20 ° C. to -60 ° C, a hysteresis loss of less than 20%, a tensile strength of at least 2.068 MPa (300 psi) and an elongation of at least 350%, said polymer comprised of interpolymerized units of from 1 to 20 weight parts of at least one unsaturated dicarboxylic acid containing 4 to 10 carbon atoms per molecule according to said process, and at least 70 weight parts of at least one copolymerizable monomer, a majority of said copolymerizable monomer having at least one acrylate monomer, all weights based on 100 weight parts total of all monomers; and casing said latex into a film.

Films made according to said process from these latexes have a unique and improved balance of properties. The films are rubbery, tough, and highly resilient, and exhibit tensile strength and elongation properties common in some "harder" acrylic films. The glass transition temperature (Tg) of the films is from -20 ° C. to -60 ° C.

The novel films can be prepared from latexes by polymerizing the monomers and other ingredients using a premix of the monomers which is metered into a reactor containing initiator: However, a preferred process is to prepare a premix in the usual manner but devoid of all or a substantial part of the unsaturated

dicarboxylic acid, and add the unsaturated dicarboxylic acid initially to the reactor before metering the premix into the reactor.

Many articles of manufacture can be made from a film or thin ply of latex. The film can be formed by conventional casting techniques or formed by dipping, coating, or spraying a substrate thereby making a continuous film. The film can be present as sheet in articles of manufacture such as gloves or boots which can be formed by coating a substrate form, drying and curing the latex and removing the film from the substrate form. Gloves or other articles made of fabric, for example, can be coated by dipping or spraying a latex onto the exterior thereof to form a barrier film.

## DETAILED DESCRIPTION OF THE INVENTION

The films prepared according to the process of the present invention are useful as coatings for leather, canvas, books, electrical sheathing, etc., as a barrier layer, or as thin ply material for making elastic gloves, boots, etc. The films exhibit a unique and improved balance of properties. They have excellent low temperature flexibility and yet exhibit a good balance of tensile strength and elongation and excellent hysteresis characteristics. More specifically, the films have an improved balance of high resilience, rubberyness, toughness, low surface tack considering their softness, heat and light stability, dry and wet and solvent properties, and low temperature flexibility. Certain properties of the films are comparable to those of some acrylate films having a higher Tg. For example, the films exhibit abrasion resistance comparable to some harder acrylate films. However, the films exhibit rubbery behavior when compared to the more plastic behavior observed with conventional acrylate films. Prior to this invention, low Tg, soft acrylic films basically exhibited a poor balance of tensile strength and elongation properties and inadequate hysteresis characteristics. The films exhibit a much improved balance of properties in this regard. Particularly, the films of this invention are low Tg, soft acrylic films that have a good balance of tensile strength and elongation and excellent hysteresis characteristics as shown by a low percent hysteresis loss.

The films disclosed herein are prepared according to the process of the present invention by polymerizing at least one unsaturated dicarboxylic acid containing 4 to 10 carbon atoms, with at least one copolymerizable monomer preferably in the presence of an initiator and a surfactant. Optionally, a crosslinking monomer can be interpolymerized with the unsaturated dicarboxylic acid(s) and the copolymerizable monomer(s). The total amount of all of the monomers charged to the reactor, whether batchwise, incrementally, and/or metered in, equals 100 parts by weight.

The use of unsaturated dicarboxylic acids is critical to the invention. The use of monocarboxylic acids such as acrylic acid or methacrylic acid does not produce the unique balance of properties in the polymer. The unsaturated dicarboxylic acids used in the invention contain 4 to 10 carbon atoms per molecule. Especially suitable dicarboxylic acids are those containing 4 to 6 carbon atoms such as itaconic acid, citraconic acid, mesaconic acid, glutaconic acid, fumaric acid and maleic acid and mixtures thereof. The anhydrides of such acids are also useful, such as maleic anhydride. The more preferred unsaturated dicarboxylic acids are itaconic acid and fumaric acid. The most preferred unsaturated dicarboxylic acid in terms of performance is itaconic acid.

The amount of the unsaturated dicarboxylic acid employed is from 1 part to 20 parts by weight, and more preferably from 2 parts to 8 parts by weight. The use of the unsaturated dicarboxylic acids in amounts above 8 parts by weight necessitates suitable adjustments in polymerization ingredients due to a destabilizing effect of the acid and some retardation of the polymerization. For example, in an experiment where 8 weight parts of itaconic acid was charged initially into the reactor using the same amount of surfactant and initiator that gave good results when 4 weight parts of itaconic acid was used, the resulting latex had a high residual monomer content which caused some difficulty in forming an even or level film. When 20 weight parts of itaconic acid was charged initially into the reactor, a latex was formed but the residual monomer level was quite high. In such cases the polymerization conditions and ingredients can be readily adjusted to obtain latexes with acceptable amounts of residual monomers. This can be done by increasing the amounts of surfactant and/or initiator used, by increasing the temperature of polymerization, by metering in part of the unsaturated dicarboxylic acid, by stripping the latex, or combinations of the above. Excellent results have been obtained using 3 to 6 parts by weight of the unsaturated dicarboxylic acid.

The films are interpolymers of (a) at least one of the above-described unsaturated dicarboxylic acids with (b) at least one copolymerizable monomer and (c) a crosslinking monomer(s). Hence, a film may be an interpolymer as simple in structure as a copolymer of 95% by weight n-butyl acrylate and 5% by weight itaconic acid. However, the films are more likely to contain interpolymerized units of more than two monomers.

The copolymerizable monomer(s) used in this invention can be any unsaturated monomer capable of interpolymerizing with the unsaturated dicarboxylic acid. The amount of copolymerizable monomer employed is such that the weight parts of the unsaturated dicarboxylic acid(s), and the crosslinking monomer(s), if used, together with the weight parts of the copolymerizable monomer(s) used total up to one hundred (100) weight parts. For example, a film containing 4 parts by weight of an unsaturated dicarboxylic acid and 2 parts by weight of a crosslinking monomer would then contain 94 parts by weight of a copolymerizable monomer(s). Since all the monomers are charged on a 100 weight parts total basis, and the conversions in the latex reaction typically reach substantial completion, the weight parts of monomer charged substantially equals the weight percent of the interpolymerized monomer in the final polymer. If this is not the case, the use of conventional analytical techniques readily establishes the weight percent of any interpolymerized monomer in the polymer. Typically, the total amount of copolymerizable monomer(s) charged into the reactor is at least 70 parts by weight, and more typically at least 90 parts by weight of the total weight of all monomers.

Examples of the copolymerizable monomers are alkyl, alkoxyalkyl, alkylthioalkyl, and cyanoalkyl acrylates and methacrylates containing 1 to 20 carbon atoms in the alkyl group; diacrylates and dimethacrylates such as ethyleneglycol dimethacrylate and diethylene glycol diacrylate, monolefins containing 2 to 10 carbon atoms such as ethylene, propylene, isobutylene, 1-hexene and 1-octene; vinyl and allyl acetates containing, 4 to 20 carbon atoms such as vinyl acetate, vinyl propionate and allyl acetate; vinyl ketones containing 4 to 20 carbon atoms such as methyl vinyl ketone; vinyl and allyl ethers containing 4 to 20 carbon atoms such as vinyl methyl ether, vinyl ethyl ether, vinyl-n-butyl ether and allyl methyl ether; vinyl aromatics containing 8 to 20 carbon atoms such as styrene, $\alpha$-methyl styrene, p-n-butyl styrene, p-n-octyl styrene and vinyl toluene; vinyl nitriles containing 3 to 6 carbon atoms such as acrylonitrile and methacrylonitrile; vinyl amides containing 4 to 20 carbon atoms such as acrylamide, methacrylamide and N-methyl methacrylamide; and dienes and divinyls containing 4 to 20 carbon atoms such as butadiene, isoprene, divinyl benzene and divinyl ether; monomers of 2 to 20 carbon atoms containing a halogen group such as vinyl chloride, vinyl bromide, vinylidene chloride, vinyl benzyl chloride, vinyl benzyl bromide, vinyl chloroacetate, allyl chloroacetate, 2-chloroethyl acrylate and chloroprene; unsaturated sulfonate monomers such as sodium styrene sulfonate and vinyl sulfonate; unsaturated carboxylic ester and amide monomers containing 4 to 20 carbon atoms such as dimethyl fumarate, dibutyl itaconate and the half-ethyl ester of itaconic acid; and unsaturated monocarboxylic acids containing 3 to 5 carbon atoms such as acrylic acid and methacrylic acid.

The two conditions on the selection of the copolymerizable monomer(s) are (1) that the glass transition temperature (Tg) of the film made is from -20 °C. to -60 °C., and more preferably from -25 °C., to -50 °C. and (2) that the copolymerizable monomer(s) contains a major portion of an acrylate monomer(s).

The acrylate monomer employed in the process of the present invention is an alkyl, alkoxyalkyl, alkylthioalkyl, or cyanoalkyl acrylate of the formula

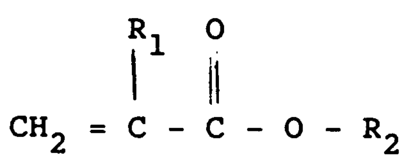

wherein $R_1$ is hydrogen or methyl, and $R_2$ is an alkyl radical containing 4 to 10 carbon atoms, or an alkoxyalkyl or alkylthioalkyl radical containing a total of 2 to 10 carbon atoms. The alkyl structure can contain primary, secondary, or tertiary carbon configurations. Examples of such acrylates are n-butyl acrylate, isobutyl acrylate, n-pentyl acrylate, isoamyl acrylate, n-hexyl acrylate, 2-methyl pentyl acrylate, n-octyl acrylate, 2-ethylhexyl acrylate, n-decyl acrylate, n-dodecyl acrylate and n-octadecyl acrylate methoxymethyl acrylate, methoxyethyl acrylate, ethoxyethyl acrylate, butoxyethyl acrylate, ethoxypropyl acrylate, methylthioethyl acrylate, hexylthioethylacrylate; n-butyl methacrylate, 2-ethylhexyl methacrylate, isodecyl methacrylate and octadecyl methacrylate. Mixtures of two or more acrylate monomers are readily employed.

Preferably, the copolymerizable monomer(s) used contains from forty percent (40%) up to one hundred percent (100%) and most preferably at least 65% by weight of acrylates of the above formula. The most preferred alkylate monomer(s) are those wherein $R_1$ is hydrogen and $R_2$ is an alkyl radical containing 4 to 10 carbon atoms or an alkoxyalkyl radical containing 2 to 8 carbon atoms. Examples of the most preferred acrylates are n-butyl acrylate, hexyl acrylate and 2-ethylhexyl acrylate, and methoxyethyl acrylate and

ethoxyethyl acrylate. Both an alkyl acrylate and an alkoxyalkyl acrylate can be used. Excellent results have been obtained when the acrylate monomer(s) employed is the most preferred acrylate monomer(s) and such monomer(s) comprises seventy-five percent (75%) to one hundred percent (100%) of the copolymerizable monomer.

The two criteria on the selection of the copolymerizable monomer such that the film has a low Tg and contains a major portion of interpolymerized acrylate monomer(s) are somewhat complementary in that the use of a high level of the preferred acrylate monomer(s) as the copolymerizable monomer readily yields a film having the required Tg value. It is understood that the films can have more than one Tg value within the prescribed Tg range.

The Tg of a film can be easily determined using differential thermal analysis. Further, the Tg of a film is predictable from the interpolymerized monomers using known formulas and readily obtainable data following the procedure and teachings given in many publications. One such publication is the book Mechanical Properties of Polymers by L. E. Nielsen, Reinhold Publishing Corp. (1967) Library of Congress catalog card no. 62-18939. Chapter 2 is devoted to transitions in polymers,and the tables given on pages 16 to 24 list out the Tg values of many polymers, including acrylate polymer films, based on the monomers employed.

Hence, the Tg of the films can be determined through knowledge of the types and amounts of copolymerizable monomers employed. However, from the aforementioned list of copolymerizable monomers, it is apparent that some of the monomers cannot be used in large amounts and yet make a film meeting the necessary criteria. For example, the "hard" copolymerizable monomers; i.e. those which would yield a homopolymer Tg value of $+80°C$. or above, would typically be used in amounts of from 0 percent to 25 percent by weight of the total weight of the copolymerizable monomers. Examples of such hard monomers are the vinyl aromatics such as styrene, $\alpha$-methyl styrene, vinyl toluene; vinyl nitriles such as acrylonitrile and methacrylonitrile; and monomers containing a halogen group such as vinyl chloride, vinylidene chloride, vinyl benzyl chloride. Further, certain of the copolymerizable monomers have an activity which, if the monomers were present in large amounts, could overshadow the features of the films. Hence, copolymerizable monomers such as the vinyl amides, the diacrylates and dimethacrylates, the unsaturated sulfonate monomers, and the unsaturated monocarboxylic acids would typically be used in amounts of from 0 percent to 5 percent by weight of the total weight of the copolymerizable monomers.

The films do not require the presence of a crosslinking monomer to achieve their unique properties. However, many uses of the films benefit from the presence of a crosslinking monomer in the film or the addition of a crosslinking agent to the film.

The crosslinking monomers used herein can be any monomer or oligomer polymerizable with the unsaturated dicarboxylic acid and copolymerizable monomer which exhibits crosslinking or which can be converted into a crosslinking site. An example of a crosslinking monomer which can be interpolymerized with the unsaturated dicarboxylic acid and copolymerizable monomer, and then converted to yield a crosslinking site is acrylamide, which, when treated with formaldehyde, forms a methylol group. The more preferred crosslinking monomers are monoethylenically unsaturated monomers containing N-methylol groups such as N-methylol acrylamide, or N-methylol derivatives of allyl carbamate which may contain one or two N-methylol groups. The N-methylol groups may be left unreacted or they may be etherized, as with $C_1$ to $C_4$ carbon alcohols. The alcohol is released on curing to regenerate the N-methylol group for cure. Alcohol etherifying agents are illustrated by methyl alcohol, ethyl alcohol, isopropyl alcohol, isobutyl alcohol, 2-ethoxyethanol, and 2-butoxy ethanol.

More particularly, the preferred crosslinking monomers are selected from N-alkylol acrylamides that contain from 4 to 18, preferably 4 to 12 carbon atoms in the alkyl group, and lower alkyl acrylamidoglycolate lower alkyl ethers containing from 7 to 20 carbon atoms. Specific examples of the particularly preferred crosslinking monomers include N-methylol acrylamide, N-methylol methacrylamide, N-butoxymethyl acrylamide, iso-butoxymethyl acrylamide and methyl acrylamidoglycolate methyl ether. Especially good results have been obtained using N-methylol acrylamide as the crosslinking monomer.

If a crosslinking monomer is not interpolymerized with the unsaturated dicarboxylic acid and the copolymerizable monomer, the film can still be crosslinked by the post-polymerization addition of a crosslinking agent to the latex or the film. Examples of such crosslinking agents are urea-formaldehyde resins, melamine-formaldehyde resins and partially methylolated melamine-formaldehyde resins and glyoxal resins. These crosslinking agents can be used in levels of from 0.1 part to 20 parts, and more preferably from 0.5 part to 2 parts, by weight based on 100 parts by weight of polymer film.

The films can be prepared from latexes. The aqueous medium in which the films are prepared may be free of traditional emulsifiers, or it may contain traditional emulsifiers. When traditional emulsifiers are used to prepare the unique films of this invention, the standard types of anionic and nonionic emulsifiers can be

employed. Useful emulsifiers include alkali metal or ammonium salts of the sulfates of alcohols having from 8 to 18 carbon atoms such as sodium lauryl sulfate, ethanolamine lauryl sulfate, and ethylamine lauryl sulfate; alkali metal and ammonium salts of sulfonated petroleum and paraffin oils; sodium salts of sulfonic acids such as dodecane-1-sulfonic acid and octadiene-1-sulfonic acid; aralkyl sulfonates such as sodium isopropyl benzene sulfonate, sodium dodecyl benzene sulfonate and sodium isobutyl naphthalene sulfonate; alkali metal and ammonium salts of sulfonated dicarboxylic acid esters such as sodium dioctyl sulfosuccinate and disodium-N-octadecyl sulfosuccinate; alkali metal or ammonium salts of the free acid of complex organic amon-and diphosphate esters; copolymerizable surfactants such as vinyl sulfonate. Nonionic emulsifiers such as octyl- or nonylphenyl polyethoxyethanol may also be used. Films having excellent stability are obtained using the alkali metal and ammonium salts of aromatic sulfonic acids, aralkyl sulfonates, long chain alkyl sulfonates and poly(oxyalkylene) sulfonates as emulsifiers.

The emulsifier or a mixture thereof may be added entirely at the outset of the polymerization or it may be added incrementally or metered throughout the run. Typically, some of the emulsifier is added to the reactor at the outset of the polymerization and the remainder is charged incrementally or proportionately to the reactor as the monomers are proportioned.

The polymerization of the monomers may be conducted at temperatures from 0 °C up to 100 °C in the presence of a compound capable of initiating the polymerizations. Initiating compounds and mixtures thereof are chosen, often in conjunction with oxidation-reduction catalysts, in an amount and type which results in a suitable initiation rate at a chosen polymerization temperature profile. Commonly used initiators include the free radical initiators like the various peroxygen compounds such as persulfates, benzoyl peroxide, t-butyl diperphtahlate, pelargonyl peroxide and 1-hydroxycyclohexyl hydroperoxide; azo compounds such as azodiisobutyronitrile and dimethylazodiisobutyrate. Particularly useful initiators are the water-soluble peroxygen compounds such as hydrogen peroxide and sodium, potassium and ammonium persulfates used by themselves or in activated systems. Typical oxidation-reduction systems include alkali metal persulfates in combination with a reducing substance such as polyhydroxyphenols, oxidizable sulfur compounds such as sodium sulfite or sodium bisulfite, reducing sugars, dimethylamino propionitrile, diazomercapto compounds or water-soluble ferricyanide compounds. Heavy metal ions may also be used to activate persulfate catalyzed polymerizations.

The amount of surfactant used is from 0.01 to 10 parts by weight, and the amount of initiator used is from 0.01 to 1.5 parts by weight, both based on 100 weight parts of the total amount of monomers.

Films of the invention prepared from latex having excellent stability are obtained using an alkali metal and ammonium persulfate as the initiator. The initiator may be charged completely into the reactor at the outset of the polymerization, or incremental addition or metering of the initiator throughout the polymerization may also be employed. Addition of the initiator throughout the polymerization is often advantageous in providing a suitable rate throughout the polymerization.

The novel acrylic films prepared from latex can be made in different ways. In one process, a premix is prepared by mixing the monomers, optionally with water, a surfactant or a mixture thereof, buffering agents and modifiers. If water is used, the aqueous premix is agitated to form an emulsion. Separately added to a reactor are more water, the initiator, and optional ingredients. The premix is then metered into the reactor and the monomers are polymerized.

In a variation on the above process, part of the premix can be added to the reactor, the initiator is then added and polymerization of the initial monomers in the reactor thereto is allowed to form seed film particles. Thereafter, the remainder of the premix or another premix is metered into the reactor and the polymerization reaction is concluded in the usual way. In yet another variation, the premix can be fed to the reactor incrementally rather than continuously. Finally, in yet another variation of the process, all of the monomers and other ingredients can be added directly to the reactor and polymerization conducted in a known manner. This last variation is typically called a batch process. Monomers can also be added to the reactor in separate streams other than in the premix.

In a preferred embodiment of the process for preparing a film of the invention from a latex, 2 to 8 weight parts of the unsaturated dicarboxylic acid such as itaconic acid is polymerized in water with 90 to 98 weight parts of an alkyl acrylate monomer such as n-butyl acrylate and 0.5 to 5 weight parts of a crosslinking monomer such as N-methylol acrylamide, in the presence of 0.1 to 5 weight part of a suitable surfactant such as sodium lauryl sulfate and 0.01 to 1.5 weight parts of a suitable initiator such as sodium persulfate.

The unsaturated dicarboxylic acid can be added all initially into the reactor before metering of the premix is commenced, or part or all of the said acid can be metered into the reactor during polymerization. In a preferred embodiment, the unsaturated dicarboxylic acid is all initially added to the reactor, and the premix containing the copolymerizable monomer(s) and crosslinking monomer(s) is metered into the

reactor. The best balance of film physical properties was obtained when all of the unsaturated dicarboxylic acid was added initially to the reactor. However, as compared to similar films made using monocarboxylic acids only, films having an improved balance of properties are also obtained when some or all of unsaturated dicarboxylic acid is added to the premix.

As already noted, processes for preparing films from acrylic latexes usually involve a number of stages. A premix is typically prepared containing one or more monomers, optionally surfactant, water and ingredients such as buffering agents, chain modifiers, and the like. The premix is vigorously agitated to form an emulsion at ambient temperature. The reactor is also prepared for polymerization by addition of water, initiator, monomer (if added to the reactor), optionally buffering agents, and other ingredients. The reactor and its contents can be preheated. The premix is metered to the reactor over a period of 0.5 to 10 or more hours, preferably 1 to 4 hours. As soon as the polymerization starts, the temperature of the reactor increases. A cold water or other type of cooling jacket around the reactor can be used to control the polymerization temperature, preferably at 30 °C to 90 °C.

The latex obtained is typically treated or processed to reduce residual monomers and the pH is adjusted to whatever value is desired. The latex is then often filtered through a cheesecloth or filter sock and stored or employed to make a film. The latex has a total solids content of from 10 to 68%, and more typically from 40% to 60%.

It should be understood that although the best results were obtained when all or at least one-half or more of the unsaturated dicarboxyclic acid was placed in the reactor initially, an unexpected improvement in the balance of the physical properties of the films was also obtained when over one-half or all of the acid is placed in the premix, as long as the acid used is the unsaturated dicarboxylic acid described herein. The use of unsaturated monocarboxylic acids, such as acrylic acid and methacrylic acid, did not work to produce the unique balance of properties in the film. Further, when acrylic acid or methacrylic acid was placed initially all in the reactor, the reaction mixture gelled or coagulated, despite attempts to prevent this by adding water during the polymerization.

As already described, in a preferred process of this invention, the unsaturated dicarboxylic acid is all added initially to the reactor, unlike prior art processes in which all of the monocarboxylic acid is typically added to the premix. The addition of large amounts of unsaturated dicarboxylic acid to the reactor initially requires adjustments in the polymerization recipe in order to obtain a film with optimum properties. For example, placing all of the unsaturated dicarboxylic acid into the reactor without making any other changes in the polymerization recipe or process can result in a larger particle size film. The reason for this is believed to be that the dicarboxylic acid reduces the efficiency of the initiator in the reactor and/or causes destabilization of forming particles in the reactor, which, in turn, can affect the particle size of the film.

It is known in acrylic film technology that the amount of the surfactant in the reactor can substantially affect the particle size of the latex film. Hence, by increasing the amount of surfactant used, the particle size of the latex film can be reduced. Since the presence of the unsaturated dicarboxylic acid in the reactor can have the affect of increasing the particle size, an upward adjustment in the amount of surfactant (and/or initiator) used can compensate for this effect.

The latexes disclosed herein have typical colloidal properties. They are anionically stabilized, have a pH of from 1 to 6 as prepared, have a particle size in the range of (1000 to 5000 angstroms), and exhibit good mechanical 100 to 500 nm stability when their pH is raised above neutral.

One of the most unique properties of the films of this invention is their excellent hysteresis characteristics. The films prepared herein have very tight hysteresis curves. The tighter a hysteresis curve, the more resilient the film. Also, the tighter the hysteresis curve, the less heat will be generated on stretching or working of the film.

The percent hysteresis loss of films were determined from the film's hysteresis curve using the following procedure. Dumbell samples of the raw film having 177.8 to 254 µm (7 to 10 mils) thickness were prepared from the latex using a draw bar. The cast films were air-dried then heated at 149 °C (300 °F). for 5 minutes. By raw film it is meant that no compounding ingredients such as fillers, pigments, plasticizers and the like were added, and no curative ingredients were added. The samples were placed in an Instron tensile testing machine and elongated to 200% elongation at a speed of 50.8 cm (20 inches)/minute. The sample was then retracted at 50.8 cm (20 inches)/minute to its original position (making one cycle), and then elongated and retracted again until five cycles were completed. The tensile/elongation (i.e. hysteresis) curves for each cycle were recorded. The percent hysteresis loss measurements were performed in each case on the recorded data for the second cycle. In a hysteresis graph of force versus elongation, the area under the curve of the figure described by the second cycle of the film to 200% elongation represents the amount of work energy needed to produce the elongation ($E_A$). The area of the figure described when the film is retracted in the cycle represents the work energy exerted by the film in returning to its original

position ($E_B$). A perfectly resilient film which exhibits no heat or other energy losses would have a hysteresis curve wherein $E_A$ would equal $E_B$, i.e. the two curves would lie on top of each other. The deviation from this ideal condition is a measure of the film's hysteresis loss. A gummy film would have a very high percent hysteresis loss.

The percent hysteresis loss of the films was determined by the following formula:

$$\text{Percent Hysteresis Loss} = \frac{E_A - E_B}{E_A} \times 100\%.$$

The films of this invention exhibit a percent hysteresis loss of less than about 20% as calculated from their hysteresis curves. The films prepared from the most preferred unsaturated dicarboxylic acids, copolymerizable monomers, and crosslinking monomers (prepared by the preferred process) have a percent hysteresis loss of below 15 percent.

The films have other properties which make them unique. They are soft, yet rubbery and tough. Their ultimate raw film tensile strength is at least 2.068 MPa (300 psi) and ultimate percent elongation is at least 350%, as measured on raw films cast with a draw bar, air-dried and heated for 5 minutes at 149°C (300°F). A way of observing the good balance of tensile strength and elongation exhibited by the films of this invention is to calculate their "TxE Product", which is simply obtained by multiplying the film's ultimate tensile strength by its percent elongation at break. The product is reported to the nearest 1000. The TxE Product is a measure of the overall strength of the film. The TxE Product of the films is at least 140,000, and more preferably at least 200,000. The TxE Product for the films made from the most preferred monomers using the most preferred process is at least 250,000.

The following examples are presented for the purpose of illustrating the invention. The examples are not to be construed as limiting the invention in any manner.

## EXAMPLES

In the following experiments, except as stated otherwise, the film was prepared from a latex by polymerizing a monomer mix of 93 to 97 parts by weight parts of the copolymerizable monomer, 2 to 4.5 weight parts of the stated acid, and 1 to 3 weight parts of the crosslinking monomer. In comparative experiments where no acid was used, the amount of copolymerizable monomer was increased accordingly. The premix was prepared in a separate tank by mixing demineralized water, sodium lauryl sulfate as the surfactant, the crosslinking monomer, and the copolymerizable monomer(s). All or part of the acid was placed in the premix or the reactor, as indicated. The reactor initially contained demineralized water, sodium lauryl sulfate, and sodium persulfate. The premix was metered into the reactor over a period of about 1.5 to about 2.5 hours, during which time the temperature in the reactor was controlled at 70°C. to 80°C.

After commencement of the metering of the premix to the reactor, in some cases a second initiator system was added to the reactor. The second initiator system consisted of sodium persulfate, sodium lauryl sulfate, and ammonium carbonate in demineralized water. The second initiator was metered into the reactor over a period of 3.5 hours. At times, an initiator booster was merely slugged into the reactor rather than metered in. When the reaction was completed, the latex in the reactor was allowed to stand for about 1.5 hours at 75°C. and was then cooled to 40°C. At this point, the latex was stripped, cooled to 30°C., its pH was adjusted with ammonia to about 4.5 pH, and it was filtered through cheesecloth and stored.

Following the above general procedures, three variations of reaction conditions were actually employed. In Variation A, the reaction temperature was 80°C., the premix metering time was 2 hours, an initiator booster containing 0.05 weight part of sodium persulfate was added after 2 hours, and the amount of sodium lauryl sulfate used was 0.05 weight part in the reactor and 0.95 weight part in the premix. Variation B was like Variation A except that the reaction temperature was 75°C. In Variation C, the reaction temperature was 70°C., 0.35 weight part of sodium persulfate initiator was in the reactor, a second initiator of 0.15 part of sodium persulfate and 0.05 part of sodium lauryl sulfate was metered in over 3.5 hours, and the amount of sodium lauryl sulfate in the reactor was 0.4 weight part and in the premix was 0.6 weight part.

The raw films were prepared in the following manner. First, the latex was neutralized by adjusting the pH of the latex to between 7 and 8 with ammonia. Thickener was added to the latex, as necessary, to raise its viscosity to about 500 MPa•s (cps) so that a level film could be obtained. A film was deposited on a polyethylene backing using a draw bar so as to yield a dry film of 177.8 µm to 254 µm (7 to 10 mils) thickness, and the film was dried at room temperature for about 24 hours. The film was then peeled from

the backing, dusted with talc if necessary for easier handling, and heated for 5 minutes at 300 ° F (149 ° C). The test specimens were prepared and tested using the following procedure. A dumbell shaped test specimen was prepared from the film and placed in an Instron tensile tester at a 254cm (1") jaw spacing. The jaws were separated at a speed of 50.8cm (20 inches)/minute. Elongation was measured using a 1.27cm (0.5 inch) benchmark. Each data point given in the examples represents an average of three separate measurements.

EXAMPLE 1

This example demonstrates the preparation of a latex of the invention, the preparation of a film of the invention from the latex, and shows a comparison of the properties of the film with those of films containing no acid, acrylic acid, or methacrylic acid in the film. Only the film prepared from the latex containing polymerized itaconic acid is representative of the invention. The other samples were prepared and are presented for comparison purposes only. All of the latexes were prepared with 2 parts by weight of N-methylol acrylamide as the crosslinking monomer, and using the process described above as Variation B. The acid, if used, was placed all in the premix and the premix was metered into the reactor. All reaction conditions and procedures were identical in these tests except for the particular acid used, if any. Ultimate tensile strength and percent elongation tests were performed on film samples of the raw films, which samples were prepared as described above. The results are given in Table A below:

**TABLE A**

| | No Acid | Acrylic Acid | Methacrylic Acid | Itaconic Acid |
|---|---|---|---|---|
| Tensile Strength, MPa (psi) | 1.42(207) | 2.41(350) | 2.27(330) | 4.77(693) |
| Elongation, % | 260 | 343 | 390 | 380 |
| TxE Product | 54000 | 120000 | 129000 | 263000 |
| Percent Hysteresis Loss | 12.2 | 18.1 | 22.9 | 18.9 |

It is apparent from the above data that the film made using itaconic acid (IA) has a superior balance of tensile strength and elongation and percent hysteresis loss. The film containing polymerized itaconic acid (IA) had a tensile strength of 4.77 MPa (693 psi) an ultimate elongation of 380%, and a TxE Product of 263000, whereas the corresponding results for acrylic acid (AA) were 2.41 MPa (350 psi), 390%, and 120000, and for methacrylic acid (MAA) were 2.27 MPa (330 psi), and 390%, and 129000 respectively. For the film prepared containing no acid at all, the tensile strength was only 1.42 MPa (207 psi), elongation was 260%, and the TxE Product was only 53800. The data shows that the film of the invention has a good

balance of tensile strength and elongation and low hysteresis loss.

EXAMPLE 2

For purposes of further comparison, the properties of a film were compared to properties of some commercial films. The film used herein is similar to the film prepared in Example 1 above except that, in this case, all of the itaconic acid was placed initially into the reactor (no itaconic acid was in the premix). The commercial films are Hycar® 2671 (Acrylic A), Hycar® 2673 (Acrylic B), and an acrylic polymer known as RHOPLEX TR934 sold by Rohm and Haas (Acrylic C). Results are given in Table B below:

TABLE B

| | Novel Polymer | Acrylic A | Acrylic B | Acrylic C |
|---|---|---|---|---|
| Tensile, MPa (psi) | 5.20 (755) | 4.58 (665) | 2.80 (407) | 4.25 (617) |
| Elongation,% | 608 | 610 | 1483 | 433 |
| TXE Product | 459000 | 406000 | 636000 | 267000 |
| Percent Hysteresis Loss | 12.8 | 22.0 | 36.4 | 12.5 |
| Tg, °C | -44 | -11 | -15 | -28 |

The data shows that the film prepared according to the process of the present invention gives a unique balance of good tensile strength and elongation and low hysteresis loss. The tensile and elongation properties and hysteresis loss of the film prepared according to the process of the present invention were actually better than most of these properties of the "harder" acrylic films, yet the Tg of the film prepared according to the process of the present invention was lower than such films.

EXAMPLE 3

This example shows the preparation and testing of films prepared according to the process of the present invention wherein the latexes were prepared using Variation A and all of the unsaturated dicarboxylic acid was placed in the premix. The following monomers were charged on the following weight basis: 4.5 parts of the stated acid, 1.0 part N-methylol acrylamide, and 94.5 parts n-butyl acrylate.

The film samples were prepared and tested as described above. As a comparison, a film was also prepared using the monocarboxylic acid, acrylic acid, in place of itaconic acid. The acrylic acid was also placed all in the premix. Results of the tests are given in Table C below.

TABLE C

| | AA all in Premix | IA all in Premix |
|---|---|---|
| Tensile, MPa (psi) | 2.13 (310) | 3.76 (546) |
| Elongation % | 493 | 553 |
| TxE Product | 153000 | 317000 |
| Percent Hysteresis Loss | 23.1 | 19.6 |

The tensile strength, elongation, TxE Product, and hysteresis loss for the film made with acrylic acid (AA) in the premix was 2.13 MPa (310 psi), 493%, 153000, and 23.1% respectively. When itaconic acid (IA) was used all in the premix, thereby making a film according to the process of this invention, the tensile strength, elongation, TxE Product, and hysteresis loss was 3.76 MPa (546 psi), 553%, 317000, and 19.6% respectively. When the experiment with the itaconic acid all placed in the premix was repeated, the results were even better, with a tensile strength of 4.62 MPa (670 psi), and elongation of 573%, a TxE Product of 366000, and a percent hysteresis loss of 17.5%. All of the films had a Tg of about -44 °C. It is apparent that the use of itaconic acid (IA) in place of acrylic acid (AA) results in a film having a superior balance of tensile strength and elongation properties and low percent hysteresis loss at a low Tg.

EXAMPLE 4

An experiment was performed wherein the itaconic acid was placed all initially in the reactor. This experiment used the same monomers and parts by weight, and same polymerization and test conditions given in Example 3 above. This film had a tensile strength of 3.49 MPa (507 psi), and elongation of 753%, a TxE Product of 382000, and a percent hysteresis loss of 19.8%.

With no buffers, the latex prepared in this Example 3 had a pH of about 1.9. As mentioned before, it is believed that the use of all of the unsaturated dicarboxylic acid initially in the reactor has the effect of reducing initiation efficiency of the polymerization and/or destabilizing the forming particles, which can result in a latex which has a larger particle size than when the acid is placed in the premix. The reduction in initiation efficiency can be overcome by increasing the amount of the surfactant or initiator, or both. This was demonstrated by conducting an experiment in which the level of the surfactant used in the reactor was increased from 0.05 weight part to 0.5 weight part, with all other conditions remaining the same. By increasing the amount of surfactant, the preparation of the film was more nearly optimized. The data obtained on the film prepared in this manner shows that the tensile strength increased to 5.33 MPa (773 psi), the elongation dropped to 647%, the TxE Product increased to 500000, and the percent hysteresis loss dropped to 14.9%. This indicates a different balance of properties than obtained using the lesser amount of surfactant. This balance of properties may be preferred in some uses.

EXAMPLE 5

This example demonstrates the superior results that can be obtained by preparing the novel films from the latexes by the preferred process wherein all or at least one-half of the unsaturated dicarboxylic acid is placed initially in the reactor. The data in Table D gives properties for films made from latexes wherein the amount of itaconic acid (IA) placed in the reactor ranged from all placed into the reactor initially to all of the itaconic acid placed in the premix. The latexes were prepared with 2 parts by weight of N-methylol acrylamide as the crosslinking monomers, and using process procedure Variation A. Results are given in Table D below.

**TABLE D**

| | 4 parts IA in Reactor | 3 parts IA in Reactor 1 part IA in Premix | 2 parts IA in Reactor 2 parts IA in Premix | 1 part IA in Reactor 3 parts IA in Premix | 4 parts IA in premix |
|---|---|---|---|---|---|
| Tensile, MPa (psi) | 5.20 (755) | 5.81 (843) | 6.13 (890) | 4.45 (645) | 4.77 (693) |
| Elongation, % | 603 | 533 | 517 | 380 | 380 |
| TxE Product | 459000 | 449000 | 460000 | 245000 | 263000 |
| Percent Hysteresis Loss | 12.8 | 12.6 | 13.6 | 14.8 | 18.9 |

When all 4 weight parts of the itaconic acid are placed initially in the reactor, tensile strength, elongation, TxE Product, and hysteresis loss were 5.46 MPa (792 psi), 688%, 459000, and 12.8% respectively. As more of the itaconic acid was placed in the premix, the film properties changed, especially in the percent elongation and percent hysteresis loss. However, no matter how the films were prepared, i.e. by the process wherein all of the itaconic acid was placed in the reactor, in the premix, or the itaconic acid

was split between the two, the films still show a superior balance of properties as compared to similar films made using acrylic acid or methacrylic acid. See Table A for a comparison.

EXAMPLE 6

The suitability of using unsaturated dicarboxylic acids other than itaconic acid is demonstrated in this Example. The films were prepared using 2 parts by weight of N-methylol acrylamide as the crosslinking monomer, and using the process procedure Variation B where all 4.0 weight parts of the defined acid was placed initially into the reactor. The unsaturated dicarboxylic acids employed were itaconic acid (IA), fumaric acid (FA), maleic acid (MA), and citraconic acid (CA). An attempt was also made to prepare comparative latexes and films which would contain no acid, acrylic acid (AA) or methacrylic acid (MAA) in place of the unsaturated dicarboxylic acid. Results are given in Table E below:

TABLE E

| | Itaconic Acid | Fumaric Acid | Maleic Acid | Citraconic Acid | Acrylic Acid | Methacrylic Acid | No Acid |
|---|---|---|---|---|---|---|---|
| Tensile, MPa (psi) | 5.20(755) | 3.13(454) | 3.03(440) | 2.25(327) | gelled | gelled | 1.42(207) |
| Elongation, % | 603 | 427 | 467 | 637 | | | 260 |
| TxE Product | 459000 | 233000 | 205000 | 208000 | | | 54000 |
| Percent Hysteresis Loss | 12.8 | 18.4 | 18.0 | 19.9 | | | 12.2 |

Both experiments wherein acrylic acid (AA) or methacrylic acid (MAA) was placed all in the reactor resulted in a gelled latex during polymerization, even though an attempt was made to prevent this by adding water to the reactor during polymerization. With itaconic acid (IA) in the reactor, the tensile strength of the film was 5.20 MPa (755 psi), elongation was 603%, the TxE Product was 459000, and the percent hysteresis loss was a low 12.8%. The use of fumaric acid (FA) in the process produced a film having a somewhat lower tensile strength and elongation and higher percent hysteresis low. The use of maleic acid (MA) or citraconic acid (CA) as the unsaturated dicarboxylic acid yielded films having lower tensile strengths and good elongations. The TxE Products and percent hysteresis loss of these films was good.

With no acid, the tensile strength of the film was only 1.42 MPa (207 psi), its elongation was only 260%, and the TxE Product was a very low 54000.

Certain of the above experiments were repeated wherein the unsaturated dicarboxylic acid was placed all in the premix (none initially in the reactor). The film prepared using maleic acid in the premix had a tensile strength of 2.42 MPa (351 psi), an elongation of 357%, and a TxE Product of 126000. The film prepared using citraconic acid in the premix had a tensile strength of 2.21 MPa (321 psi), an elongation of 553%, and a TxE Product of 178000. Both of these results are better than those obtained when using acrylic acid in the reactor (as above) or in the premix (see Table A).

## EXAMPLE 7

This example demonstrates the use of other copolymerizable monomers in the preparation of the films of this invention. The procedures used were the same as those used in Example 6 wherein the itaconic acid was placed all initially into the reactor. A portion of the n-butyl acrylate in the premix was replaced with one or more of the indicated higher Tg yielding copolymerizable monomers in the amounts shown. Results are given in Table F below:

TABLE F

| | 5 PHR ST 5 PHR AN | 10 PHR VAC | 10 PHR MMA |
|---|---|---|---|
| Tensile, MPa (psi) | 5.77 (838) | 4.67 (678) | 6.50 (943) |
| Elongation, % | 670 | 630 | 560 |
| TxE Product | 562000 | 427000 | 529000 |
| Percent Hysteresis Loss | 17.8 | 13.8 | 14.5 |
| Calculated Tg, °C | -25 | -36 | -29 |

The above results demonstrate that the novel films of this invention can be readily prepared using a large range of copolymerizable monomers, as long as the Tg of the final films is between -20°C. and -60°C., and an acrylate monomer is present as the major copolymerizable monomer. Of course, the presence of one or more other copolymerizable monomers, particularly "harder" monomers, can affect the physical properties of the films made from the corresponding latexes. For example, with 5 weight parts of styrene (ST) and 5 weight parts of acrylonitrile (AN) used in place of a corresponding amount of n-butyl acrylate, the tensile strength of the film was 5.77 MPa (838 psi) and elongation was 670%. Using 10 weight parts of vinyl acetate (VAC), the film tensile strength was 4.67 MPa (678 psi) and elongation was 630%. With 10 weight parts of methyl methacrylate (MMA), tensile strength was 6.50 MPa (943 psi) and elongation was 560%. In all three cases, the TxE Products were very high and the percent hysteresis loss was within the stated range.

A very low Tg film was prepared using the same procedure as given above using 94 weight parts of 2-ethyl hexyl acrylate (2-EHA) as the sole copolymerizable monomer. The film was weak, having a tensile strength of 1.58 MPa (230 psi), an elongation of 980%, and a Tg of -65.5°C. This film did not meet the necessary criteria of the films prepared according to the proces of this invention. This Example shows that a choice of copolymerizable monomer(s) which takes the Tg of the film outside of the stated Tg range, results in a film that does not have the unique balance of properties described herein.

## EXAMPLE 8

This example demonstrates the use of other crosslinking monomers in the preparation of films. The crosslinking monomer is used in each experiment at 2.0 weight parts in the premix. The itaconic acid was used at 4 parts by weight and was placed all initially in the reactor. The process procedure used was Variation B. Results are given in Table G below:

TABLE G

| | NMA | NMMA | MAGME |
|---|---|---|---|
| Tensile, MPa (psi) | 5.72 (830) | 6.46 (937) | 6.27 (910) |
| Elongation, % | 773 | 360 | 1055 |
| TxE Product | 642000 | 337000 | 960000 |
| Percent Hysteresis Loss | 15.4 | 13.9 | 14.2 |

The first column of data in Table G shows data from a latex polymerization wherein N-methylol acrylamide (NMA) was used as the crosslinking monomer. The film prepared using N-methylol methacryomide (NMMA) as the crosslinking monomer had a higher tensile strength [6.46 MPa (937 psi)] but lower elongation (360%). When methyl acrylamidoglycolate methyl ether (MAGME) was used as the crosslinking monomer, the film tensile strength was 6.27 MPa (910 psi), elongation was 1055%, and an exceptionally high TxE Product was obtained.

From Table G, it is readily seen that a broad range of crosslinking monomers are suitable for use in this invention.

EXAMPLE 9

A series of latexes were prepared in which the amount of itaconic acid (IA) and the amount of N-methylol acrylamide (NMA) were varied. The copolymerizable monomer used was n-butyl acrylate at 93 to 97 parts by weight. The itaconic acid was placed all initially in the reactor. The initiator used was sodium persulfate. Process procedure C was employed. The results of the tests on the films are given in Table H below.

TABLE H

| Run | IA (parts) | NMA (parts) | Initiator in Reactor (parts) | Tensile Strength MPa (psi) | Elongation (%) | TxE Product |
|---|---|---|---|---|---|---|
| 1 | 4 | 2 | 0.35 | 4.93 (715) | 607 | 434000 |
| 2 | 4 | 2 | 0.35 | 4.32 (627) | 573 | 359000 |
| 3 | 2 | 2 | 0.35 | 4.89 (710) | 420 | 298000 |
| 4 | 3 | 2 | 0.1 | 4.50 (653) | 577 | 377000 |
| 5 | 2 | 1 | 0.1 | 3.60 (523) | 587 | 307000 |
| 6 | 3 | 1 | 0.35 | 3.69 (536) | 563 | 302000 |
| 7 | 4 | 3 | 0.35 | 4.04 (587) | 603 | 354000 |
| 8 | 3 | 3 | 0.1 | 4.15 (602) | 500 | 301000 |

The above data shows that the films can be readily prepared using various amounts of the unsaturated dicarboxylic acid and the crosslinking monomer.

EXAMPLE 10

This example demonstrates the resistance to heat and ultraviolet aging which can cause some films to discolor by turning yellow or in severe cases brown. Yellowing cannot be tolerated in some applications of film forming such as paints and certain coatings.

The films of this example were prepared from a latex containing 4 weight parts itaconic acid, 92 weight parts N-butyl acrylate 2 weight parts ethyl acrylate, and 2 weight parts n-methylol acrylamide. The novel films of the present invention were compared to a commercially available acrylic latex (Hycar® 2671, sold by The BFGoodrich Company) which is employed in many coating applications.

The films were each tested after every ten minutes in an oven set at 149 °C (300 °F) up to a total of 60 minutes. The amount of light reflected from the films, expressed as a percentage of the incoming light is set forth in Table I. A high percentage indicates a very clear film, while a low percentage indicates severe yellowing with low light transmittance. The reference standard used to calabrate the measuring device was 78.0.

Table I

| Film/Minutes | 0 | 10 | 20 | 30 | 40 | 50 | 60 |
|---|---|---|---|---|---|---|---|
| Hycar® 2671 | 74 | 73 | 70 | 68 | 68 | 67 | 63 |
| Present Invention | 71 | 71 | 69 | 68 | 69 | 69 | 67 |

Based upon the results of this example, the commercially available acrylic latex film loses about 15% of its transmissibility, while a typical novel film of the present invention loses about 5.6% of its transmittance after 60 minutes at 149 ° C (300 ° F).

The accelerated ultraviolet aging test consisted of subjecting a film of Hycar® 2671 and a film prepared according to the process of the present invention (as previously described with respect to the heat aging test) to light energy emitted from a carbon element employed in a Fade-O-Meter. Each film was tested every 20 hours to determine its transmissibility. The reference standard employed was 78.0. The results are set forth in Table J.

Table J

| Reflectance (%) | | | | | | |
|---|---|---|---|---|---|---|
| Film/Hours | 0 | 20 | 40 | 60 | 80 | 100 |
| Hycar® 2671 | 79 | 77 | 76 | 70 | 70 | 69 |
| Present Invention | 70 | 71 | 71 | 71 | 71 | 71 |

The results of Table J indicate that the film loses very little, if any transmissibility after 100 Fade-O-Meter hours. On the other hand, however, the commercially available acrylic latex film lost about 12.6% of its transmissibility after 100 hours of exposure to ultraviolet radiation.

The good heat and ultraviolet aging properties of the films prepared according to the process of the present invention were achieved without the addition of well-known anti-aging agents such as commercial antioxidants.

EXAMPLE 11

This example demonstrates the use of pigment filler loading in a film prepared according to the process of the present invention versus a typical acrylic film (Hycar® 2671). The data generated indicates the amount of loading added to the film and the resultant tensile/elongation properties. It is desirable in some applications for a film to maintain good tensile/elongation properties when loading is present.

The latex was adjusted to a pH of 8 to 9 before mixing with a 60% Catalpo Clay dispersion at varying parts per hundred, phr. The Catalpo Clay dispersion, containing 4 phr of a dispersant known as Tamol® 850 (Rohm & Haas Co.), was also preadjusted to a pH of 8 to 9. Films of the latex were laid on glass plates. The films were allowed to dry overnight before talcing and removing from the glass plates. Before testing, the films were cured 5 minutes at 149 ° C (300 ° F). The tensile strengths of the films were tested on a Thwing-Albert Intellect II tester. The F-0.3 mm (12 mil) films were die cut into dumbbell shapes. The tensile tester jaw separating speed was 50 cm/min., while the initial jaw spacing was preset at 2.54 cm. The indicated elongation is automatically calculated by the instrument based on the jaw separation at the point of film breakage. (Test conditions).

The results of the example are set forth in Table K which compare elongation % to parts of Catalpo Clay per hundred parts of polymer, and tensile strength [MPa (psi)] to parts of Catalpo Clay per 100 parts of polymer, respectively.

The films were compared with Hycar® 2671. The films having a Tg of -43 ° C comprised 92 weight parts n-butyl acrylate, 2 weight parts ethyl acrylate, 4 weight parts itaconic acid, 2 weight parts n-methylol acrylamide. The film having a Tg of -29 ° C comprised 86 weight parts n-butyl acrylate, 2 weight parts ethyl acrylate, 6 weight part acrylonitrile, 4 weight parts itaconic acid, 2 weight parts n-methylol acrylamide.

Testing terminates at 500 phr with the indication that higher parts addition of Catalpo Clay is needed before film embrittlement or 0% elongation is reached.

**Table K**
**Loading**

| LATEX +phr CATALPO CLAY | Hycar* 2671 TEN. MPa (PSI) | Hycar* 2671 %ELONG. | Hycar* 2671 TEA | Novel Latex with Tg -43°C TEN. MPa (PSI) | Novel Latex with Tg -43°C %ELONG. | Novel Latex with Tg -43°C TEA | Novel Latex with Tg -29°C TEN. MPa (PSI) | Novel Latex with Tg -29°C %ELONG. | Novel Latex with Tg -29°C TEA |
|---|---|---|---|---|---|---|---|---|---|
| +10phr | 4.68 (680) | 781.8 | 4.644 | 2.55 (370) | 1027.5 | 3.639 | 3.72 (540) | 1048.6 | 5.649 |
| +30phr | 6.82 (990) | 836.5 | 7.841 | 4.41 (640) | 912.3 | 5.735 | 3.17 (460) | 599.6 | 2.458 |
| +50phr | 8.34 (1210) | 786.4 | 7.834 | 4.55 (660) | 628.1 | 3.435 | 3.99 (580) | 537.9 | 3.199 |
| +100phr | 8.96 (1300) | 414.5 | 5.353 | 4.14 (600) | 339.2 | 2.150 | 4.96 (720) | 345.4 | 2.379 |
| +150phr | 10.06 (1460) | 269.6 | 4.625 | 5.86 (850) | 286.2 | 2.344 | 6.13 (890) | 235.7 | 2.262 |
| +200phr | 9.58 (1390) | 137.5 | 2.229 | 6.20 (900) | 216.6 | 2.039 | 7.79 (1130) | 206.8 | 2.211 |
| +250phr | 8.34 (1210) | 255.4 | 3.309 | — | — | — | — | — | — |
| +300phr | 11.86 (1720) | 66.8 | 1.427 | 7.37 (1070) | 123.5 | 1.832 | 6.82 (990) | 94.8 | 1.507 |
| +350phr | 11.65 (1690) | 32.2 | 0.673 | — | — | — | — | — | — |
| +400phr | 11.30 (1640) | 31.1 | 0.664 | — | — | — | 10.34 (1500) | 64.6 | 1.302 |
| +450phr | 12.34 (1790) | 37.7 | 0.991 | 6.68 (970) | 54.3 | 0.844 | 9.72 (1410) | 55.5 | 1.132 |
| +500phr | 11.99 (1740) | 21.7 | 0.537 | 7.74 (1080) | 52.2 | 0.840 | 9.99 (1450) | 43.3 | 0.916 |

Results are averages. TEA = Tensile Energy Absorption

This data indicates that the films prepared according to the process of the present invention maintain useful properties under conditions of high filler loading.

## Claims

1. Use of a copolymer comprising interpolymerized units of from 1 to 20 weight parts of at least one unsaturated dicarboxylic acid containing 4 to 10 carbon atoms per molecule interpolymerized with 0.1 to 10 weight parts of a crosslinking monomer and at least 70 weight parts of at least one copolymerizable monomer of which a majority is at least one acrylate monomer, all weight parts based on 100

weight parts total of all monomers, as a film, having a Tg of from -20 to -60 °C, a percent hysteresis loss of less than 20% and a raw film tensile strength of at least 2.068 MPa (300 psi) and an elongation of at least 350 percent.

**2.** The use of claim 1, wherein said dicarboxylic acid contains 4 to 6 carbon atoms and is used in an amount from 3 to 8 weight parts.

**3.** The use of claim 2, wherein said unsaturated dicarboxylic acid is selected from the group consisting of itaconic acid, citraconic acid, glutaconic acid, fumaric acid, maleic acid, and mixtures thereof.

**4.** The use of claim 3, said film having a Tg of from -25 °C. to -50 °C. and containing interpolymerized units of copolymerizable monomers where at least 65% by weight of such monomers are acrylates of the following formula

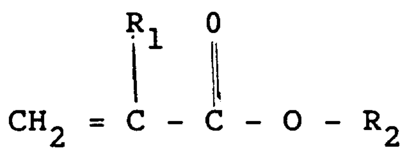

where $R_1$ is hydrogen or methyl, and $R_2$ is alkyl radical containing 4 to 10 carbon atoms or an alkoxyalkyl or alkylthioalkyl radical containing 2 to 10 carbon atoms.

**5.** The use of claim 4, wherein the copolymerizable monomer is n-butyl acrylate.

**6.** The use of claim 5, wherein the unsaturated dicarboxylic acid is itaconic acid.

**7.** The use of claim 5, wherein the crosslinking monomer is N-methylol acrylamide.

**8.** The use of claim 1, wherein said film is present as a coating.

**9.** The use of claim 2, wherein said coating is applied to a glove.

**10.** The use of claim 2, wherein said coating is a applied to a boot.

**11.** The use of claim 1, wherein said film is present as a sheet in the form of a boot.

**12.** The use of claim 1, wherein said film is present as a sheet in the form of a glove.

**13.** A process for preparing a film from a latex comprising the steps of:

preparing a latex having a polymer with Tg of from -20 °C. to -60 °C, a hysteresis loss of less than 20%, a tensile strength of at least 2.068 MPa (300 psi) and an elongation of at least 350%, said polymer comprised of interpolymerized units of from 1 to 20 weight parts of at least one unsaturated dicarboxylic acid containing 4 to 10 carbon atoms per molecule interpolymerized with 0.1 to 10 weight parts of a crosslinking monomer, and at least 70 weight parts of at least one copolymerizable monomer, a majority of said copolymerizable monomer having at least one acrylate monomer, all weights based on 100 weight parts total of all monomers; and

casing said latex into a film.

**14.** The process of claim 13, further including the steps of drying said film and curing said film.

**15.** The process of claim 14, wherein said step of preparing a latex includes the steps of:

metering a premix comprising said copolymerizable monomer and up to about one-half of said dicarboxylic acid to a reactor containing at least one-half of said dicarboxylic acid; and

conducting polymerization in the reactor at a temperature from 0 °C to 100 °C.

**16.** The process of claim 14, wherein said dicarboxylic acid contains 4 to 6 carbon atoms and is used in an amount from 3 to 8 weight parts.

**17.** The process of claims 14, wherein said dicarboxylic acid contains 4 to 6 carbon atoms and the amount of said crosslinking monomer is 0.5 to 10 weight parts.

**18.** The process of claim 17, wherein said unsaturated dicarboxylic acid is selected from the group consisting of itaconic acid, citraconic acid, glutaconic acid, fumaric acid, maleic acid, and mixtures thereof.

**19.** The process of claim 18, wherein said polymer has a Tg of from -25°C to -50°C and containing interpolymerized units of copolymerizable monomers where at least 40% by weight of such monomers are acrylates of the following formula

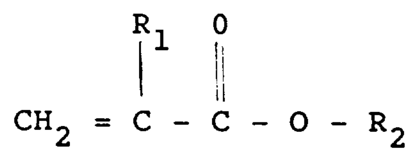

where $R_1$ is hydrogen or methyl, and $R_1$ is alkyl radical containing 4 to 10 carbon atoms or an alkoxyalkyl or alkylthioalkyl radical containing 2 to 10 carbon atoms.

**20.** The process of claim 19, wherein said copolymerizable monomer is n-butyl acrylate.

**21.** The process of claim 20, wherein said unsaturated dicarboxylic acid is itaconic acid.

**22.** The process of claim 21, wherein said crosslinking monomer is n-methylol acrylamide.

**Patentansprüche**

**1.** Verwendung eines Copolymers, das interpolymerisierte Einheiten von 1 bis 20 Gew.-Teilen wenigstens einer ungesättigten, 4 bis 10 Kohlenstoff-Atome im Molekül enthaltenden Dicarbonsäure, interpolymerisiert mit 0,1 bis 10 Gew.-Teilen eines vernetzenden Monomers und wenigstens 70 Gew.-Teilen wenigstens eines copolymerisierbaren Monomers, dessen größerer Teil wenigstens ein Acrylat-Monomer ist, umfaßt, wobei sämtliche Gew.-Teile auf 100 Gew.-Teile der Gesamt-Menge aller Monomerer bezogen sind, als Film mit einem $T_g$-Wert von -20 °C bis -60 °C, einem prozentualen Hysterese-Verlust von weniger als 20 % und einer Zugfestigkeit der Rohfolie von wenigstens 2,068 MPa (300 psi) und einer Dehnung von wenigstens 350 %.

**2.** Verwendung nach Anspruch 1, worin die Dicarbonsäure 4 bis 6 Kohlenstoff-Atome enthält und in einer Menge von 3 bis 8 Gew.-Teilen eingesetzt wird.

**3.** Verwendung nach Anspruch 2, worin die Dicarbonsäure aus der aus Itaconsäure, Citraconsäure, Glutaconsäure, Fumarsäure, Maleinsäure und deren Mischungen bestehenden Gruppe ausgewählt ist.

**4.** Verwendung nach Anspruch 3, worin der Film einen $T_g$-Wert von -25 °C bis -50 °C hat und interpolymerisierte Einheiten von copolymerisierbaren Monomeren enthält, worin wenigstens 65 Gew.-% solcher Monomerer Acrylate der folgenden Formel

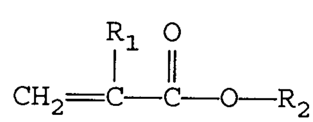

sind, worin

$R_1$ Wasserstoff oder Methyl ist und

$R_2$ ein Alkyl-Rest mit 4 bis 10 Kohlenstoff-Atomen oder ein Alkoxyalkyl- oder Alkylthioalkyl-Rest mit 2 bis 10 Kohlenstoff-Atomen ist.

**5.** Verwendung nach Anspruch 4, worin das copolymerisierbare Monomer n-Butylacrylat ist.

**6.** Verwendung nach Anspruch 5, worin die ungesättigte Dicarbonsäure Itaconsäure ist.

**7.** Verwendung nach Anspruch 6, worin das vernetzende Monomer N-Methylolacrylamid ist.

**8.** Verwendung nach Anspruch 1, worin der Film als Überzug vorliegt.

**9.** Verwendung nach Anspruch 2, worin der Überzug auf einen Handschuh aufgetragen wird.

**10.** Verwendung nach Anspruch 2, worin der Überzug auf einen Stiefel aufgetragen wird.

**11.** Verwendung nach Anspruch 1, worin der Film als Folie in Form eines Stiefels vorliegt.

**12.** Verwendung nach Anspruch 1, worin der Film als Folie in Form eines Handschuhs vorliegt.

**13.** Verfahren zur Herstellung eines Films aus einem Latex, umfassend die Schritte
des Herstellens eines Latex mit einem Polymer mit einem $T_g$-Wert von -20 °C bis -60 °C, einem Hysterese-Verlust von weniger als 20 % und einer Zugfestigkeit von wenigstens 2,068 MPa (300 psi) und einer Dehnung von wenigstens 350 %, wobei das Polymer interpolymerisierte Einheiten von 1 bis 20 Gew.-Teilen wenigstens einer ungesättigten, 4 bis 10 Kohlenstoff-Atome im Molekül enthaltenden Dicarbonsäure, interpolymerisiert mit 0,1 bis 10 Gew.-Teilen eines vernetzenden Monomers und wenigstens 70 Gew.-Teilen wenigstens eines copolymerisierbaren Monomers, dessen größerer Teil wenigstens ein Acrylat-Monomer ist, umfaßt, wobei sämtliche Gew.-Teile auf 100 Gew.-Teile der Gesamt-Menge aller Monomerer bezogen sind, und
des Gießens des Latex zu einem Film.

**14.** Verfahren nach Anspruch 13, weiterhin umfassend die Schritte des Trocknens des Films und des Aushärtens des Films.

**15.** Verfahren nach Anspruch 14, worin der Schritt des Herstellens eines Latex die Schritte der dosierten Zugabe einer Vormischung, die das copolymerisierbare Monomer und bis zu etwa einer Hälfte der Dicarbonsäure enthält, in einen Reaktor, der wenigstens eine Hälfte der Dicarbonsäure enthält, und die Durchführung der Polymerisation in dem Reaktor bei einer Temperatur von 0 °C bis 100 °C,

**16.** Verfahren nach Anspruch 14, worin die Dicarbonsäure 4 bis 6 Kohlenstoff-Atome enthält und in einer Menge von 3 bis 8 Gew.-Teilen eingesetzt wird.

**17.** Verfahren nach Anspruch 14, worin die Dicarbonsäure 4 bis 6 Kohlenstoff-Atome enthält und die Menge des vernetzenden Monomers 0,5 bis 10 Gew.-Teile beträgt.

**18.** Verfahren nach Anspruch 17, worin die Dicarbonsäure aus der aus Itaconsäure, Citraconsäure, Glutaconsäure, Fumarsäure, Maleinsäure und deren Mischungen bestehenden Gruppe ausgewählt ist.

**19.** Verfahren nach Anspruch 18, worin das Polymer einen $T_g$-Wert von -25 °C bis -50 °C hat und interpolymerisierte Einheiten von copolymerisierbaren Monomeren enthält, worin wenigstens 40 Gew.-% solcher Monomerer Acrylate der folgenden Formel

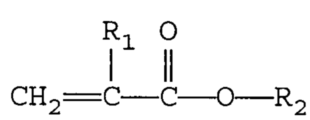

sind, worin
$R_1$ Wasserstoff oder Methyl ist und
$R_2$ ein Alkyl-Rest mit 4 bis 10 Kohlenstoff-Atomen oder ein Alkoxyalkyl- oder Alkylthioalkyl-Rest mit 2 bis 10 Kohlenstoff-Atomen ist.

**20.** Verfahren nach Anspruch 19, worin das copolymerisierbare Monomer n-Butylacrylat ist.

**21.** Verfahren nach Anspruch 20, worin die ungesättigte Dicarbonsäure Itaconsäure ist.

**22.** Verfahren nach Anspruch 21, worin das vernetzende Monomer N-Methylolacrylamid ist.

## Revendications

**1.** Utilisation d'un copolymère comprenant des motifs interpolymérisés de 1 à 20 parties en poids d'au moins un acide dicarboxylique insaturé contenant de 4 à 10 atomes de carbone par molécule interpolymérisée avec de 0,1 à 10 parties en poids d'un monomère de réticulation et au moins 70 parties en poids d'au moins un monomère copolymérisable dont la majeure partie est au moins un monomère acrylate, toutes les parties en poids étant basées sur un total de 100 parties pour tous les monomères, en tant que film ayant une Tg de -20 à -60 °C, un pourcentage de perte par hystérésis inférieure à 20% et une résistance du film brut à la traction d'au moins 2,068 MPa (300 psi) et un allongement d'au moins 350 pour cent.

**2.** Utilisation selon la revendication 1, dans laquelle ledit acide dicarboxylique contient de 4 à 6 atomes de carbone et est utilisé en une quantité allant de 3 à 8 parties en poids.

**3.** Utilisation selon la revendication 2, dans laquelle ledit acide dicarboxylique insaturé est choisi dans le groupe constitué de l'acide itaconique, de l'acide citraconique, de l'acide glutaconique, de l'acide fumarique, de l'acide maléique, et de leurs mélanges.

**4.** Utilisation selon la revendication 3, ledit film ayant une Tg de -25 °C à -50 °C, et contenant des motifs interpolymérisés de monomères copolymérisables où au moins 62% en poids de tels monomères sont des acrylates de formule suivante

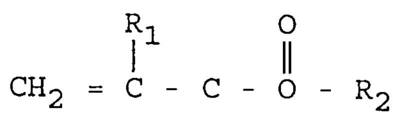

où $R_1$ est l'hydrogène ou le méthyle, et $R_2$ est un radical alkyle contenant de 4 à 10 atomes de carbone ou un radical alcoxyalkyle ou alkylthioalkyle contenant de 2 à 10 atomes de carbone.

**5.** Utilisation selon la revendication 4, dans laquelle le monomère copolymérisable est l'acrylate de n-butyle.

**6.** Utilisation selon la revendication 5, dans laquelle l'acide dicarboxylique insaturé est l'acide itaconique.

**7.** Utilisation selon la revendication 5, dans laquelle le monomère de réticulation est le N-méthylol acrylamide.

**8.** Utilisation selon la revendication 1, dans laquelle ledit film est présent en tant que revêtement.

**9.** Utilisation selon la revendication 2, dans laquelle ledit revêtement est appliqué à un gant.

**10.** Utilisation selon la revendication 2, dans laquelle ledit revêtement est appliqué à une botte.

**11.** Utilisation selon la revendication 1, dans laquelle ledit film est présent en une feuille en forme de botte.

**12.** Utilisation selon la revendication 1, dans laquelle ledit film est présent en une feuille en forme de gant.

**13.** Procédé pour préparer un film à partir d'un latex comprenant les étapes consistant:

à préparer un latex ayant un polymère avec une température Tg de -20 °C à -60 °C, une perte par hystérésis inférieure à 20%, une résistance à la traction d'au moins 2,068 MPa (300 psi) et un allongement d'au moins 350%, ledit polymère étant composé de motifs interpolymérisés de 1 à 20 parties en poids d'au moins un acide dicarboxylique insaturé contenant de 4 à 10 atomes de carbone par molécule interpolymérisée avec de 0,1 à 10 parties en poids d'un monomère de réticulation, et

d'au moins 70 parties en poids d'au moins un monomère copolymérisable, la majeure partie dudit monomère copolymérisable ayant au moins un monomère acrylate, tous les poids étant pris par rapport à un total de 100 parties pour tous les monomères; et

à déposer ledit latex sur un film.

**14.** Procédé selon la revendication 13, comprenant de plus les étapes de séchage dudit film et de durcissement dudit film.

**15.** Procédé selon la revendication 14, dans lequel ladite étape de préparation d'un latex comprend les étapes consistant:

à doser un prémélange comprenant ledit monomère copolymérisable, et jusqu'à environ une moitié dudit acide dicarboxylique, que l'on introduit dans un réacteur contenant au moins une moitié dudit acide dicarboxylique; et

à conduire la polymérisation dans le réacteur à une température de 0 °C à 100 °C.

**16.** Procédé selon la revendication 14, dans lequel ledit acide dicarboxylique contient de 4 à 6 atomes de carbone et est utilisé en une quantité allant de 3 à 8 parties en poids.

**17.** Procédé selon la revendication 14, dans lequel ledit acide dicarboxylique contient de 4 à 6 atomes de carbone, et la quantité dudit monomère de réticulation est de 0,5 à 10 parties en poids.

**18.** Procédé selon la revendication 17, dans lequel ledit acide dicarboxylique insaturé est choisi dans le groupe constitué de l'acide itaconique, de l'acide citraconique, de l'acide glutaconique, de l'acide fumarique, de l'acide maléique, et de leurs mélanges.

**19.** Procédé selon la revendication 18, dans lequel ledit polymère possède une Tg de -25 °C à -50 °C et contient des motifs interpolymérisés de monomères copolymérisables où au moins 40% en poids de tels monomères sont des acrylates de formule suivante

```
           R1        O
           |         ||
CH2  =  C  -  C  -  O  -  R2
```

où $R_1$ est l'hydrogène ou le méthyle, et $R_2$ est un radical alkyle contenant de 4 à 10 atomes de carbone, ou un radical alcoxyalkyle ou alkylthioalkyle contenant de 2 à 10 atomes de carbone.

**20.** Procédé selon la revendication 19, dans lequel ledit monomère copolymérisable est l'acrylate de n-butyle.

**21.** Procédé selon la revendication 20, dans lequel ledit acide dicarboxylique insaturé est l'acide itaconique.

**22.** Procédé selon la revendication 21, dans lequel ledit monomère de réticulation est le N-méthylol acrylamide.